(19) Europäisches Patentamt
European Patent Office
Office européen des brevets

(11) Publication number: **0 516 150 A1**

# (12) EUROPEAN PATENT APPLICATION

(21) Application number: **92109100.5**

(22) Date of filing: **29.05.92**

(51) Int. Cl.$^5$: **C08L 71/12**, C08L 77/00, C08K 5/09, //(C08L77/00,71:12), (C08L71/12,77:00)

(30) Priority: **31.05.91 IT MI911503**

(43) Date of publication of application: **02.12.92 Bulletin 92/49**

(84) Designated Contracting States: **BE DE ES FR GB NL**

(71) Applicant: **ECP ENICHEM POLIMERI S.r.l.**
**16, Piazza della Repubblica**
**I-20124 Milano(IT)**

(72) Inventor: **Ciaperoni, Aldemaro, Dr.**
**9, Via Piave**
**I-20021 Bollate, Milan(IT)**
Inventor: **Moro, Alessandro, Dr.**
**37, Via Molinella**
**I-30030 Cazzago, Venezia(IT)**
Inventor: **Pippa, Roberto, Dr.**
**14, Via Perosi**
**I-30033 Noale, Venezia(IT)**
Inventor: **Venti, Paolo, Dr.**
**8, Via Andorra**
**I-35100 Padova(IT)**
Inventor: **Vianello, Domenico, Dr.**
**178, Via Orlanda**
**I-30030 Campalto, Venezia(IT)**

(74) Representative: **Weinhold, Peter, Dr. et al**
**Patentanwälte Dr. V. Schmied-Kowarzik Dipl.-Ing. G. Dannenberg Dr. P. Weinhold Dr. D. Gudel Dipl.-Ing. S. Schubert Dr. P. Barz**
**Siegfriedstrasse 8**
**W-8000 München 40(DE)**

## (54) Thermoplastic composition based on polyphenylene ether and polyamide.

(57) Described are thermoplastic compositions having a good balance of mechanical, physical and thermal properties and a good chemical resistance and processability, comprising:
(A) poly(phenylene) ether;
(B) polyamide; and
(C) an alkenylsuccinic anhydride.

EP 0 516 150 A1

The present invention relates to a thermoplastic composition based on poly(phenylene) ether and polyamide.

More in particular, the present invention relates to a composition having a good balance of mechanical, physical and thermal properties and a satisfactory chemical resistance and a good processability, comprising a poly(phenylene) ether and a polyamide.

The poly(phenylene) ether resins, also known as poly(phenylene) oxide resins, represent a well-known family of technopolymers which are characterized by a good combination of thermal, mechanical and dielectrical properties within a wide temperature range. This combination of properties makes the poly(phenylene) ether resins suitable for use in a variety of applications by means of injection or extrusion molding techniques.

In spite of these numerous possible commercial applications of the poly(phenylene) ether resins, their utilization is limited, due to their poor processability, mainly attributable to the low fluidity in the molten state which can cause difficulties during the extrusion and injection molding thereof.

A further drawback thereof is their poor solvent resistance after moulding and their low resilience (IZOD), which further limits their use for certain applications.

To obviate these shortcomings it has been suggested to blend the poly(phenylene) ether resins with other polymers which possess said lacking properties.

Thus, US-A-3,379,792, for example, suggests to improve the fluidity of the poly(phenylene) ether resins by adding a polyamide thereto. According to the teachings of this patent, however, the blends are limited to a polyamide concentration of not more than 25% by weight; in fact, a higher amount of polyamide involves delamination and a significant decay of the other physico-mechanical properties such as resiliency.

In fact, it is known from the literature that poly(phenylene) ether resins and polyamide resins are not or not fully compatible with each other, so that poor properties and phase separation occur when the polyamide concentration is rather high.

To overcome this drawback, it is known from the literature to add to the mixture an additive which is reactive with the poly(phenylene) ether and polyamide resins, generally known as compatibilizing agent.

Thus, according to US-A-4,315,086 and the corresponding EP-A-24,120, compositions comprising poly(phenylene) ether and polyamide, showing superior resilience characteristics and excellent processability, are preparable by mixing the two polymers in the molten state with 0.01 to 30% by weight of a compound selected from (a) a liquid diene polymer; (b) an epoxy compound and (c) a compound having both (i) an ethylenic double bond (C = C) or triple bond (C = C), and (ii) a carboxylic anhydride, amide, imide, carboxylic ester, amino or hydroxyl group.

JP-A-84/66452 describes similar polymeric compositions prepared by using a poly(phenylene) ether which has been pretreated with one of the above compounds (a) to (c) in the presence of a free radical initiator.

However, the resulting compositions do not exhibit an excellent balance of properties and therefore there still exists an interest in the production of compositions of the above type which have improved properties and combinations of properties, respectively.

There has now been found a particular class of compatibilizing agents which allow to substantially improve the mechanical, thermal, processability and/or chemical resistance properties of poly(phenylene) ether/polyamide blends.

Said class of compatibilizing agents is represented by alkenylsuccinic anhydrides of general formula (I):

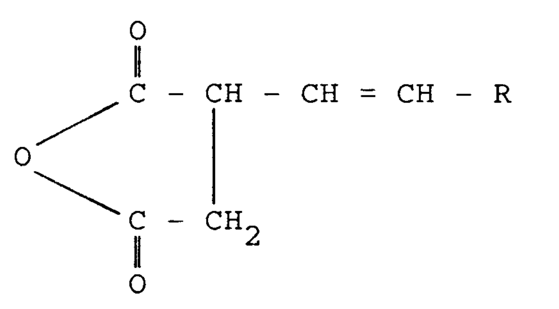 (I)

wherein R is a linear or branched alkyl group having from 1 to 20, particularly 2 to 16, carbon atoms.

It has further been found that the position of the double bond in the alkenylsuccinic anhydrides significantly influences the properties of the poly(phenylene) ether/polyamide blends. In fact, an optimum combination of mechanical, physical and thermal properties, of chemical resistance and of processability is

achieved only when the double bond originates from the first carbon atom in the side chain; when the double bond is in the "omega" position, the above optimum combination of properties in the resulting compositions cannot be observed.

The present invention, therefore, provides a thermoplastic composition having an excellent balance of mechanical, physical and thermal properties and of chemical resistance and a good flowability in the molten state, comprising:

(A) poly(phenylene) ether,

(B) polyamide, and

(C) an alkenylsuccinic anhydride of formula (I):

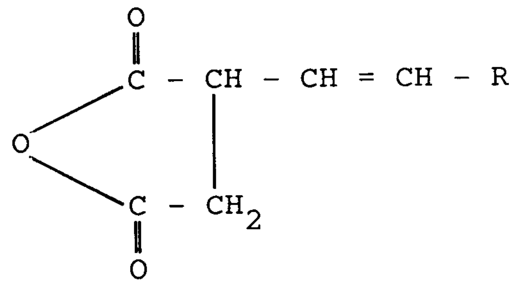

(I)

wherein R is a linear or branched alkyl radical containing from 1 to 20, particularly 2 to 16, carbon atoms.

The blends of the present invention may be prepared by any conventional blending method. For example, the mixing can be carried out in the molten state, and time and temperature may be selected and determined as a function of the composition. The temperatures are generally in the range of from about 200 to about 300° C.

Any known mixing unit can be utilized. The method can be continuous or discontinuous. Specifically, single-screw and double-screw extruders, Banbury mixers, mixing rollers and the like can be used.

Although all of the components of the composition can be introduced at the beginning and directly into the mixing unit, in the presence of or without a radical initiator, it may prove advantageous in certain instances to pre-mix one of the two resins, preferably the poly(phenylene) ether, with the alkenylsuccinic anhydride of formula (I), before the mixing with the other resin.

A preferred method comprises dissolving the poly(phenylene) ether in a suitable solvent, e.g., toluene or ortho-dichlorobenzene, and then adding the alkenylsuccinic anhydride of general formula (I) and a free radical initiator (such as benzoyl peroxide) dissolved in a solvent (preferably that in which the polymer has been dissolved). The solution may then be heated at a temperature of from 85 to 160° C and, thereafter, the reaction procuct may be isolated by precipitation. The product thus obtained may be mixed with the polyamide in any known mixing unit.

The present invention comprises compatible blends of poly(phenylene) ether and polyamide in any proportion. Typically, the poly(phenylene) ether will be present in an amount ranging from 5 to 95% by weight and, correspondingly, the polyamide will be present in an amount of from 95 to 5% by weight, based upon the total weight of said two resins.

A preferred composition comprises from 25 to 75% by weight of poly(phenylene) ether and, correspondingly, from 75 to 25% by weight of polyamide.

The compatibilizing agent (C) of formula (I) will be present in an amount which is at least sufficient to effect compatibility of the two resin components (A) and (B). The expression "compatibility" is intended to encompass adequate dispersion of the two resins in a manner which provides useful thermoplastic compositions having acceptable properties and non-delaminating products.

Typically, at least 0.1 part by weight of the compatibilizing agent (C) of formula (I) will be necessary per 100 parts by weight of components (A) plus (B).

Preferred compositions are those containing approximately 0.2 to 2 parts by weight of the compatibilizing agent (C) per 100 parts by weight of the two resin components (A) and (B).

Therefore, a particularly preferred composition of the present invention comprises:

- 100 parts by weight of a mixture consisting of:
  (A) from 25 to 75% by weight of poly(phenylene) ether, and
  (B) from 75 to 25% by weight of polyamide, and
- from 0.2 to 2 parts by weight of an alkenylsuccinic anhydride of general formula (I) above.

Examples of alkenylsuccinic anhydrides of formula (I) comprise butenylsuccinic anhydride, octenylsuccinic anhydride, nonenylsuccinic anhydride, decenylsuccinic anhydride, dodecenylsuccinic anhydride, hexadecenylsuccinic anhydride and octadecenylsuccinic anhydride. Dodecenylsuccinic anhydride is particularly preferred for use in the compositions of the present invention.

The poly(phenylene) ethers used in the compositions of the present invention are a well-known class of polymers. They are widely utilized in industry, especially as technopolymers, in applications which call for tenacity and thermal stability.

These poly(phenylene) ethers are polymers or copolymers which comprise a plurality of structural units of general formula (II):

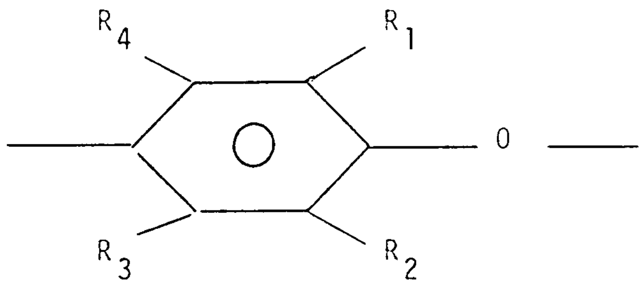

(II)

wherein $R_1$, $R_2$, $R_3$ and $R_4$ independently represent an optionally substituted hydrocarbon group, halogen or hydrogen.

Examples of $R_1$, $R_2$, $R_3$ and $R_4$ are hydrogen, halogen such as chlorine, bromine and fluorine, $C_1$-$C_{18}$ hydrocarbon groups, such as, for example, alkyl or substituted alkyl groups such as methyl, ethyl, n- and i-propyl, n-, sec- and tert-butyl, n-amyl, n-hexyl, 2,3-dimethylbutyl, chloroethyl, hydroxyethyl, phenylethyl, hydroxymethyl, carboxymethyl, methoxycarbonylethyl and cyanoethyl, aryl or substituted aryl groups such as phenyl, chlorophenyl, nethylphenyl, dimethylphenyl, ethylphenyl and benzyl and allyl.

These polymers and processes for preparing them are broadly described in the literature. As an example, reference may be made to US-A-3,226,361; 3,234,183; 3,306,874; 3,306,875; 3,257,357; 3,257,358; 3,337,501 and 3,787,361 etc., the content of which is incorporated herein by reference.

Preferred poly(phenylene) ethers of the present invention are those of general formula (III):

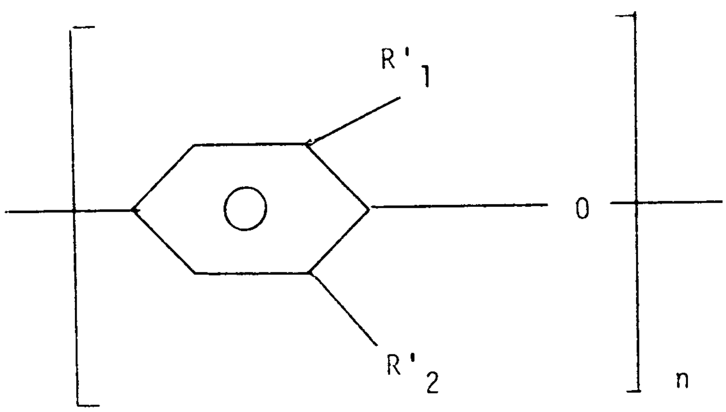

(III)

in which $R'_1$ and $R'_2$ independently represent an alkyl group containing from 1 to 4 (e.g. 1 or 2) carbon atoms and n is at least 50 and preferably ranges from 60 to about 600.

Illustrative examples of poly(phenylene) ethers which are particularly suitable for the compositions of the present invention are:

- poly(2,6-di-methyl-1,4-phenylene) ether;
- poly(2,6-di-ethyl-1,4-phenylene) ether;
- poly(2-methyl-6-ethyl-1,4-phenylene) ether;
- poly(2,6-di-propyl-1,4-phenylene) ether;
- poly(2-ethyl-6-propyl-1,4-phenylene) ether and the like;

the most preferred polyphenylene ether is poly(2,6-di-methyl-1,4-phenylene) ether.

The term "polyphenylene ether", whenever used in the present specification and in the claims, includes

both the homo-polymers and the copolymers containing the structural units of, e.g., formula (II) indicated hereinbefore, such as, e.g., the copolymers comprising units deriving from 2,6-di-methyl phenol and 2,3,6-tri-methyl phenol; as well as the grafted copolymers prepared by grafting one or more vinyl monomers such as acrylonitrile or vinylaromatic compounds such as styrene or polymers such as polystyrene or elastomers onto the poly(phenylene) ether chain.

Poly(phenylene) ethers generally have a number average molecular weight (determined by Gel Permeation Chromatography) of from 5,000 to 120,000 and their inherent viscosity is higher than (or at least) 0.1 dl/g and very often ranges from 0.30 to 0.90 dl/g, as measured in chloroform at 23° C.

These poly(phenylene) ethers can be produced by oxidation of a phenol compound with oxygen or an oxygen-containing gas in the presence of a catalyst for the oxidative coupling. Any known catalyst suitable for the oxidative polymerization can be utilized. Generally said catalysts comprise at least one compound of a heavy metal such as copper, manganese or cobalt, usually in combination with other types of catalytic compounds. Examples of suitable catalysts are those containing a cuprous or cupric salt, for example a cuprous salt in combination with a tertiary amine and/or a secondary amine, such as, for example, cuprous chloride-trimethylamine and dibutylamine, cuprous acetate-triethylamine or cuprous chloride-pyridine; or a cupric salt in combination with a tertiary amine and a hydroxide of an alkali metal, such as cupric chloridepyridine-potassium hydroxide; these catalysts are described, for example, in US-A-3,306,874; 3,306,875; 3,914,266 and 4,028,341.

Another class of suitable catalysts are those which contain manganese or cobalt, frequently complexed with one or more chelating and/or complexing agents such as di-alkylamines, alkanolamines, alkylene diamines, o-hydroxyaromatic aldehydes, o-hydroxyazo compounds, omega-hydroxy-oximes, o-hydroxy-aryloximes and beta-diketones. All of these catalysts are well known in literature and are described, for example, in US-A-3,956,242; 3,962,181; 3,965,069; 4,075,174; 4,093,595-598; 4,102,865; 4,184,034 and 4,385,168.

The polyamides which are suitable for preparing the compositions of the present invention can, for example, be prepared by polymerization of monoamino-monocarboxylic acids or the corresponding lactams having at least two carbon atoms between the amino group and the carboxylic group; or by polymerization of substantially equimolar amounts of a diamine which contains at least two carbon atoms between the amine groups, and a dicarboxylic acid; or also by polymerization of a (mono)amino-(mono)carboxylic acid and/or a corresponding lactam, as defined above, along with substantially equimolar amounts of diamine and of dicarboxylic acid. The dicarboxylic acid can be utilized in the form of a derivative thereof such as, for example, an ester or an acid chloride.

The term "substantially equimolar" is used to denote both strictly equimolar amounts and small deviations therefrom, as required by conventional techniques in order to stabilize the viscosity of the resulting polyamides.

Examples of monoamine-monocarboxylic acids or lactams thereof, which are utilizable for preparing polyamides, comprise the compounds containing from 2 to 16 carbon atoms between the amine group and the carboxylic group, said carbon atoms forming a ring with the -CO-NH- group in the case of lactams. Typical examples of aminocarboxylic acids and lactams are: omega-amino-caproic acid, butyrolactam, pivalolactam, caprolactam, capryl-lactam, enantolactam, undecanolactam, dodecanolactam, 3- and 4-amino-benzoic acid, etc.

Diamines suitable for use in the preparation of polyamides comprise alkylene diamines having a straight or branched chain, arylene diamines and alkyl-arylene diamines.

Examples of suitable diamines are those of general formula (IV):

$H_2N-(CH_2)_p-NH_2$ (IV)

wherein p is an integer ranging from 2 to 16, such as trimethylene diamine, tetramethylene diamine, pentamethylene diamine, octamethylene diamine and, particularly, hexamethylene diamine, as well as trimethyl-hexamethylene diamine, meta-phenylene diamine, meta-xylylene diamine and the like.

The dicarboxylic acids can be aliphatic or aromatic. Among the aromatic acids isophthalic acid and terephthalic acid are preferred.

The preferred aliphatic acids are those of general formula (V):

$HOOC-R_5-COOH$ (V)

wherein $R_5$ is a divalent aliphatic group containing at least two carbon atoms, and preferably from 2 to 18 carbon atoms, such as, e.g., sebacic acid, octadecandioic acid, suberic acid, glutaric acid, pimelic acid and

adipic acid.

Typical examples of polyamides or nylons, as they are usually called, are nylon 6, nylon 6,6, nylon 11, nylon 12, nylon 6,3, nylon 6,4, nylon 6,10 and nylon 6,12.

Partially aromatic polyamides can also be utilized in the compositions of the present invention. The term "partially aromatic polyamides" denotes polyamides which may be obtained by substituting, in part or as a whole, an aromatic residue for an aliphatic residue in an aliphatic nylon. Examples thereof are the polyamides derived from terephthalic and/or isophthalic acid and trimethyl-hexamethylene diamine; from adipic acid and meta-xylylene diamine; from adipic acid, azelaic acid and 2,2-bis-(p-aminocyclohexyl)-propane; or from terephthalic acid and 4,4'-diamino-dicyclohexylmethane.

Mixtures and/or copolymers of two or more of the above polyamides or of prepolymers thereof can be used as well.

Preferred polyamides are nylon 6, nylon 6,6, nylon 11 and nylon 12; most preferred are nylon 6 and nylon 6,6.

The average molecular weight of the polyamides is advantageously higher than about 10,000 and preferably higher than about 15,000 and up to 40,000, and their melting point is preferably higher than about 200 ° C.

The term "polyamide", whenever used in the present specification and in the appended claims, also comprises the block polyamides of types A-B and A-B-A, in which A is a polyamide block and B is a polyalkylene glycol, as well as the resilient or super-resilient polyamides which are prepared by blending the conventional polyamides with an elastomeric polymer or copolymer.

These resilient or super-resilient polyamides are well known in the market and disclosed, for example, in US-A-4,174,358; 4,474,927; 4,346,194; and 4,251,644, the contents of which are incorporated herein by reference.

In the practice of the present invention, it may be further suitable and desirable to add a rubber-like polymeric modifier to further improve the physical properties, particularly the resilience of the impact strength, and the processability of the compositions. Such modifiers are well known in the art and are typically derived from one or more monomers selected from olefins, vinylaromatic monomers, acrylic or alkyl-acrylic acids and their ester derivatives as well as conjugated dienes. Especially preferred modifiers are the rubber-like high-molecular weight materials, including natural and synthetic polymeric materials showing elasticity at room temperature. Suitable modifiers comprise both homopolymers and copolymers, including random, block, radial block, graft and core-shell copolymers as well as combinations thereof.

Specific examples of polymeric modifiers include: high density polyethylene, medium density polyethylene and low density polyethylene, linear low density polyethylene, polypropylene, poly(1-butene), propyene-ethylene copolymers, the copolymers of ethylene with other copolymerizable monomers including, for example, vinyl acetate, acrylic acid and methacrylic acid as well as the ester derivatives thereof, ionomer resins containing pendant carboxylic groups which may be wholly or partially neutralized with metal ions, polystyrenes, ABS copolymers, poly(styrene-acrylonitrile) (SAN) and styrene resins as disclosed in US-A-3,383,435.

Other examples of rubber-like polymeric modifiers are the block polymers which comprise units of vinylaromatic monomer and hydrogenated, partially hydrogenated and non-hydrogenated conjugated diene, having the structure SB and SBS, such as polystyrene-polybutadiene, polystyrene-polyisoprene, polystyrene-polybutadiene-polystyrene, polystyrene-polyisoprenepolystyrene, poly(alpha-methylstyrene)-polybutadiene-poly-(alpha-methylstyrene)-polyisoprene-poly-(alpha-methylstyrene); as well as the rubber-like polystyrene-ethylene-propylene block copolymers; these polymers are commercially available, e.g. under the trade marks SOLPRENE® (PHILLIPS), CARIFLEX®, KRATON® D and KRATON® G (Shell).

Further types of rubber-like modifiers which can be used in the compositions of the instant invention are polybutadiene, butadiene-styrene copolymers, poly(chlorobutadiene), ethylene-propylene-diene monomer (EPDM), and the core-shell type graft copolymers having a core consisting of a conjugated diene or a cross-linked acrylic rubber and one or more shells polymerized thereon and derived from a vinylaromatic monomer and/or acrylic monomer, alone or in combination with other vinyl monomers.

Such core-shell copolymers are well known and widely available commercially, e.g., from Rohm and Haas Company under the tradenames PARALOID® EXL 3386 and EXL 2607, and are described, e.g., in US-A-3,808,180; 4,034,013; 4,096,202; 4,180,494 and 4,292,233.

Particularly interesting and advantageous results may be achieved when the modifier is an olefinic elastomer containing a vinylaromatic monomer grafted thereon, wherein the olefinic elastomer is a rubber-like copolymer, having a Mooney viscosity (ML-4) at 100 ° C ranging from 10 to 150, of at least two different alpha-mono-olefins having a straight chain (such as ethylene, propylene, butene-1, octene-1 and the like) and at least one other copolymerizable monomer, generally a polyene and typically a non-conjugated diene.

Preferably one of the alpha-mono-olefins is ethylene.

The weight ratio of ethylene to the other alpha-monoolefin in the rubber-like copolymer usually is in the range of from 20/80 to 80/20. Particularly preferred copolymers are the ethylene/propylene/non-conjugated diene (triene) terpolymers in which the non-conjugated diene (triene) can be cyclic or acyclic, such as 5-methylene-2-norbornene; 5-ethylidene-2-norbornene; 5-isopropylene-3-norbornene; pentadiene-1,4; hexadiene-1,4; hexadiene-1,5; heptadiene-1,5; dodecatriene-1,7,9; methyl-heptadiene-1,5; norbornadiene-2,5; cyclooctadiene-1,5; dicyclopentadiene; tetrahydroindene; 5-methyl-tetrahydroindene, etc. The diene (triene) content of said (ter)polymers usually ranges from about 2 to about 20% by weight and preferably from about 8 to about 18% by weight, based on the total, of monomeric diene (triene) units in the rubber-like terpolymer. Particularly favourable results may be obtained by using a rubber-like terpolymer having a Mooney viscosity (ML-4) at 100 °C of from 30 to 90 and an iodine number of higher than 5 and preferably of from 10 to 40.

The term "vinylaromatic monomer", whenever used in the present specification and in the claims, comprises ethylenically unsaturated compounds of general formula (V):

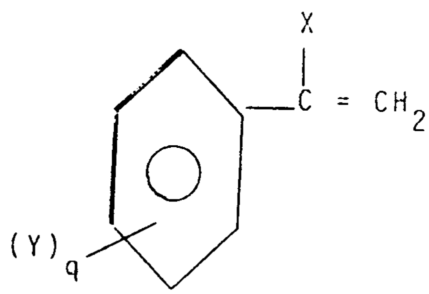

(V)

wherein:

X represents hydrogen or an alkyl radical having from 1 to 4 carbon atoms (e.g. methyl or ethyl);

Y represents halogen (e.g. Cl, Br, I or F) or an alkyl radical having from 1 to 4 carbon atoms (e.g. methyl or ethyl);

q is 0 or an integer of from 1 to 5.

Examples of vinyl-aromatic monomers of general formula (V) are styrene; methyl-styrene; mono-, di-, tri-, tetra- and penta-chlorostyrene and the corresponding alpha-methyl-styrenes; styrenes which are alkylated in the nucleus and the corresponding alpha-methyl-styrenes such as ortho- and para-methyl-styrenes, ortho- and para-ethyl-styrenes, ortho- and para-methyl-alpha-methyl-styrenes, etc.

These monomers can be utilized either alone or in admixture with one another.

It is to be understood that in the grafting polymerization not all of the vinylaromatic monomers will be grafted onto the rubber-like substrate; a part of the monomers forms a free polymer which is present in physical admixture with the grafted polymer.

Usually, the molecular weight of the vinylaromatic polymer favourably influences the impact strength characteristics of the mixtures. Thus, for example, excellent impact strength results may be obtained with vinylaromatic polymers having an average molecular weight higher than 100,000 and up to 2,000,000.

The amount of vinylaromatic polymer grafted onto the olefinic elastomer is not critical but generally ranges from 10 to 50% by weight, calculated on the grafted polymer, while the amount of free vinylaromatic polymer usually ranges from 10 to 50% by weight.

The amount of monomer grafted onto the polymer can be determined by extraction of the product with a solvent for the ungrafted resin.

The amount of the rubber-like modifier can be up to 100 parts by weight, and preferably ranges from 5 to 50 parts by weight, per 100 parts by weight of the mixture of poly(phenylene) ether (A), polyamide (B), and alkenylsuccinic anhydride (C).

In addition to components (A), (B) and (C) the compositions of the present invention may contain conventional additives, such as reinforcing agents (such as, for example, glass fibres, carbon fibres, organic and inorganic high-modulus fibres, metal fibres, inorganic fillers, carbon black, etc.) antiflame agents, dyestuffs, pigments, stabilizers, lubricants, etc., which are well-known to those skilled in the art.

The reinforcing additives generally are used in amounts not exceeding 50% by weight and preferably not higher than 30% by weight, calculated on the total composition.

Particularly preferred reinforcing additives are glass fibres which can be untreated or, even better, are treated with silanes, titanates, or zirconates as is well-known in the art.

Suitable stabilizers for the compositions of the present invention comprise the known thermal and oxidation stabilizers which are suitable and generally utilized for polyamides, polyphenylene ether resins or elastomers. For example, liquid phosphates and hindered phenols can be added to the compositions of the present invention in amounts which usually range from 0.05 to 5% by weight.

The compositions of the present invention are easily processable by injection molding and by extrusion and exhibit a combination of properties which makes them particularly suitable for use in the manufacture of shaped articles having a high impact strength along with a good thermal stability and a low water sensitivity. Thanks to these properties, the compositions of the present invention can be used in the motor transport sector, for the manufacture of articles which can be furnace-painted, parts which come into contact with motors, electric househould appliances, electronic articles and technical articles in general, e.g., in the form of cups, pans, boxes, containers, panels, sheets, rods, etc.

The following non-limitative examples are to further illustrate the present invention.

EXAMPLE 1 (comparative)

Preparation of the composition

Into a Brabender plastograph equipped with a 50 ml cell and heated at 240°C there was introduced a mixture consisting of:

- 59% by weight of poly(2,6-dimethyl-1,4-phenylene) ether (PPE) having an intrinsic viscosity of 0.47 dl/g in chloroform at 23°C, and
- 41% by weight of nylon 6 produced by Montedipe S.r.l. under the tradename NIVION PLAST® B-27.

The Brabender mastication speed was programmed according to a cycle of 50-120-50 r.p.m. and the residence time of the mixture in the plastograph was 9 minutes.

The resulting mixture was ground, compression molded at 260°C and characterized.

The characteristics of the resulting mixture are reported in the following Table.

EXAMPLE 2

Treatment of poly(2,6-dimethyl-1,4-phenylene) ether with alkenylsuccinic anhydride of general formula (I)

In a 500 ml three neck flask equipped with mechanical stirrer, reflux condenser and nitrogen inlet, 50 g of poly(2,6-dimethyl-1,4-phenylene) ether having an intrinsic viscosity of 0.47 dl/g (as measured in chloroform at 23°C) were dissolved in 250 ml of toluene.

When the dissolution was completed, 1.5 g of dodecenylsuccinic anhydride and then 0.5 g of di-lauroyl-peroxide (LAUROX® ), dissolved in 20 ml of toluene, were added.

The resulting mixture was heated under reflux for 2 hours and, after cooling to 40°C, was poured into 1,500 ml of acetone. The resulting precipitate was filtered, washed twice with 300 ml of acetone and dried in an oven at 100°C under vacuum (10 mm Hg) for 6 hours.

By the potentiometric analysis 0.037 meq. $H^+$/g were measured on the resulting product.

Preparation of the composition

Into the Brabender plastograph of example 1 there was introduced a mixture consisting of:

- 59% by weight of poly(2,6-dimethyl-1,4-phenylene) ether treated with dodecenylsuccinic anhydride as described above;
- 41% by weight of nylon 6 produced by Montedipe S.r.l. under the tradename NIVION PLAST® B-27.

The mixture was processed as in example 1, and the resulting mixture was ground, compression molded at 260°C and characterized.

The characteristics of the obtained mixture are given in the following Table.

EXAMPLE 3 (comparative)

Preparation of the composition

The procedure of example 2 was exactly repeated, except for replacing the poly(2,6-dimethyl-1,4-phenylene) ether treated with dodecenylsuccinic anhydride of general formula (I) by the same polymer treated with omega-dodecenylsuccinic anhydride.

The characteristics of the mixture thus obtained are indicated in the following Table.

EXAMPLE 4

Into a Brabender plastograph, equipped with a 50 ml cell and heated to 240 °C, there was introduced a mixture consisting of:

- 70% by weight of poly(2,6-dimethyl-1,4-phenylene) ether treated with dodecenylsuccinic anhydride as described in example 2;
- 30% by weight of KRATON® G 1701 (SHELL), a polystyrene-ethylene-propylene block rubber having a polystyrene/ethylene-propylene elastomer weight ratio of about 35/65.

The Brabender mastication speed was programmed according to a cycle of 50-120-50 r.p.m. and the residence time of the mixture in the plastograph was 4 minutes.

The mixture leaving the first plastograph was fed to a second plastograph of the same type together with nylon 6 and poly(2,6-dimethyl-1,4-phenylene) ether treated with dodecenylsuccinic anhydride as desribed in example 2, in the following proportions:

- 33.3% by weight of the mixture leaving the first plastograph;
- 41% by weight of nylon 6 produce by Montedipe S.r.l. under the tradename NIVION PLAST® B-27, and
- 25.7% by weight of poly(2,6-dimethyl-1,4-phenylene)ether of example 1.

The operative conditions were the same as those in the first plastograph.

The resulting mixture was ground, compression molded at 260 °C and characterized.

The obtained characteristics are reported in the following Table.

EXAMPLE 5 (comparative)

The procedure of example 4 was exactly repeated, except for replacing the poly(2,6-dimethyl-1,4-phenylene) ether treated with dodecenylsuccinic anhydride of general formula (I) by the same polymer treated with omega-dodecenylsuccinic anhydride.

The characteristics of the mixture thus obtained are indicated in the following Table.

EXAMPLE 6

The procedure of example 4 was repeated, replacing the KRATON® G 1704 rubber by the same quantity of a EPDM elastomer grafted with styrene having the following composition: 40% by weight of EPDM rubber (Mooney viscosity (ML-4) 62-72 at 100 °C and iodine number equal to 18), 28% by weight of grafted styrene and 32% by weight of styrene in the form of homopolymer having a weight average molecular weight (Mw) equal to 1,119,000, mixed with said rubber.

The characteristics of the mixture so obtained are listed in the following Table.

EXAMPLE 7 (comparative)

The procedure of example 6 was exactly repeated, except for replacing the poly(2,6-dimethyl-1,4-phenylene) ether treated with dodecenylsuccinic anhydride of general formula (I) by the same polymer treated with omega-dodecenylsuccinic anhydride.

The characteristics of the mixture so obtained are reported in the following Table.

TABLE

| EXAMPLE | CHARACTERISTICS | | |
|---|---|---|---|
| | Yield Stress Method ASTM D 638 (MPa) | Elastic modulus Method ASTM D 638 (MPa) | IZOD notch resilience deter= mined on 3.2 mm. specimens at 23°C. Method ASTM D 256 (J/m) |
| 1 | 38 | 2200 | 30 |
| 2 | 60 | 2500 | 38 |
| 3 | 41 | 2200 | 33 |
| 4 | 36 | 1800 | 220 |
| 5 | 38 | 1800 | 50 |
| 6 | 31 | 1700 | 180 |
| 7 | 35 | 1720 | 30 |

## Claims

**1.** A thermoplastic composition comprising:
(A) poly(phenylene) ether,
(B) polyamide, and
(C) alkenylsuccinic anhydride of general formula (I):

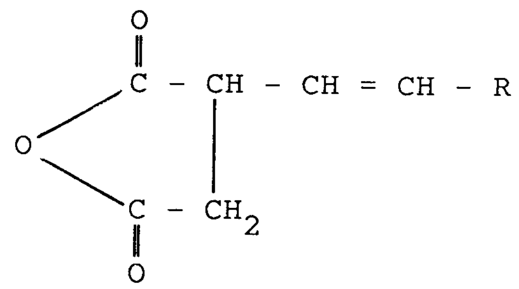

(I)

wherein R is a linear or branched $C_1$-$C_{20}$ alkyl group.

2. Composition according to claim 1, wherein the amount of component (A) ranges from 5 to 95, particularly 25 to 75% by weight and that of component (B) ranges from 95 to 5, particularly 75 to 25% by weight, based upon the total weight of (A) plus (B).

3. Composition according to any one of claims 1 and 2, wherein the amount of component (C) is at least 0.1 parts by weight and particularly from 0.2 to 2 parts by weight, per 100 parts by weight of (A) plus (B).

4. Composition according to any one of the preceding claims, wherein component (C) is selected from butenylsuccinic anhydride, octenylsuccinic anhydride, nonenylsuccinic anhydride, decenylsuccinic anhydride, dodecenylsuccinic anhydride, hexadecenylsuccinic anhydride, octadecenylsuccinic anhydride and mixtures thereof and particularly comprises dodecenylsuccinic anhydride.

5. Composition according to any one of the preceding claims, wherein component (A) has general formula (III):

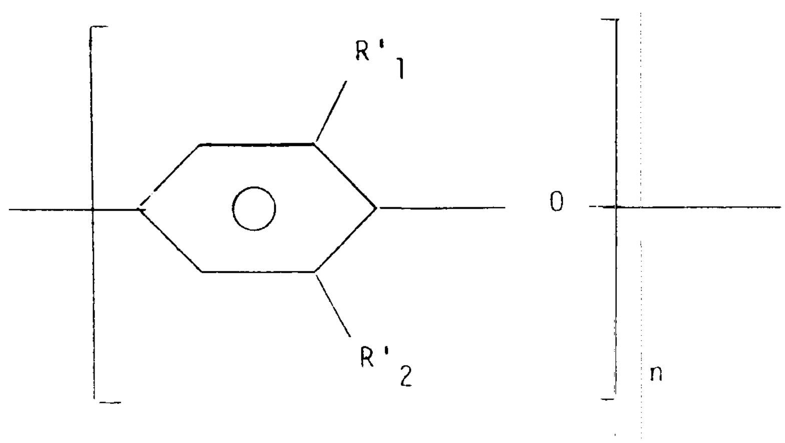

(III)

wherein $R'_1$ and $R'_2$ independently are $C_1$-$C_4$ alkyl groups and n is at least 50 and particularly ranges from 60 to about 600.

6. Composition according to any one of the preceding claims, wherein component (A) comprises poly(2,6-dimethyl-1,4-phenylene) ether having a number average molecular weight of from 5,000 to 120,000 and an inherent viscosity higher than 0.1 dl/g and particularly of from 0.30 to 0.90 dl/g, as measured in chloroform at 23 ° C.

7. Composition according to any one of the preceding claims, wherein component (B) comprises nylon 6 and/or nylon 6,6 having an average moelcular weight of at least 10,000 and preferably ranging from 15,000 to 40,000.

8. Composition according to any one of the preceding claims, additionally containing a rubber-like polymeric modifier, preferably in an amount of from 5 to 50 parts by weight per 100 parts by weight of

the mixture of components (A), (B) and (C), particularly a polystyrene-ethylene-propylene block copolymer.

**9.** Composition according to claim 8, wherein the polymeric modifier comprises a vinylaromatic monomer-hydrogenated, partially hydrogenated or non-hydrogenated conjugated diene-block copolymer having the structure SB or SBS; and/ or an olefinic elastomer containing a vinylaromatic monomer grafted thereon.

**10.** Thermoplastic composition according to claim 9, wherein the olefinic elastomer is a rubber-like copolymer, having a Mooney viscosity (ML-4) at 100 °C of from 10 to 150, of at least two different linear alpha-mono-olefins and at least one polyene copolymerizable therewith, preferably a non-conjugated diene, and particularly is an ethylene/propylene/non-conjugated diene terpolymer having a diene content of from about 2 to 20% by weight, particularly 8 to 18% by weight, based on the terpolymer, said terpolymer having a Mooney viscosity (ML-4) at 100 °C of from 30 to 90 and an iodine number of at least 5, preferably of from 10 to 40.

**11.** Composition according to any one of claims 9 and 10, wherein the vinylaromatic monomer is partially grafted onto the rubber-like substrate and partially forms a polymer which is in physical admixture with the grafted polymer.

**12.** Composition according to claim 11, wherein the average molecular weight of the vinylaromatic polymer ranges from 100,000 to 2,000,000.

**13.** Composition according to any one of claims 11 and 12, wherein the amount of grafted vinylaromatic monomer ranges from 10 to 50% by weight and the amount of free polymer ranges from 20 to 50% by weight.

**14.** Use of the compositions according to any one of claims 1 to 13 for the production of molded articles.

**15.** Molded articles obtainable from the compositions according to any one of claims 1 to 13.

European Patent Office

# EUROPEAN SEARCH REPORT

Application Number

EP 92 10 9100

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | WO-A-8 505 372 (GENERAL ELECTRIC COMPANY)<br>* page 11, line 24 - page 12, line 3; claim 1 * | 1-7,14, 15 | C08L71/12<br>C08L77/00<br>C08K5/09<br>//(C08L77/00, 71:12)<br>(C08L71/12, 77:00) |
| A | EP-A-0 319 339 (TORAY INDUSTRIES, INC.)<br>* claims 1-11 * | 1,8-13 | |
| A | US-A-4 824 915 (AYCOCK ET AL.)<br>* claims 1,5 * | 1,4-6 | |
| A | FR-A-2 024 787 (UNION CARBIDE CANADA LIMITED)<br>* claim 1 * | 1,4,7 | |
| | | | TECHNICAL FIELDS SEARCHED (Int. Cl.5) |
| | | | C08L<br>C08K |

The present search report has been drawn up for all claims

| Place of search | Date of completion of the search | Examiner |
|---|---|---|
| THE HAGUE | 06 AUGUST 1992 | GLANDDIER A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document